(19) Europäisches Patentamt / European Patent Office / Office européen des brevets

(11) **EP 2 491 265 B1**

(12) **EUROPÄISCHE PATENTSCHRIFT**

(45) Veröffentlichungstag und Bekanntmachung des Hinweises auf die Patenterteilung:
**27.08.2014 Patentblatt 2014/35**

(21) Anmeldenummer: **10768756.8**

(22) Anmeldetag: **15.10.2010**

(51) Int Cl.:
**F16D 65/14** *(2006.01)*    **F16D 65/092** *(2006.01)*

(86) Internationale Anmeldenummer:
**PCT/EP2010/065525**

(87) Internationale Veröffentlichungsnummer:
**WO 2011/048023 (28.04.2011 Gazette 2011/17)**

(54) **SELBSTVERSTÄRKENDE SCHEIBENBREMSE UND BREMSBELAG DAFÜR**

SELF-REINFORCING DISC BRAKE AND BRAKE LINING THEREFOR

FREIN À DISQUE AUTOSERREUR ET GARNITURE DE FREIN CORRESPONDANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.10.2009 DE 102009050332**

(43) Veröffentlichungstag der Anmeldung:
**29.08.2012 Patentblatt 2012/35**

(73) Patentinhaber: **KNORR-BREMSE Systeme für Nutzfahrzeuge GmbH**
**80809 München (DE)**

(72) Erfinder:
• **GEISSLER, Steffen**
**63110 Rodgau (DE)**
• **BAUMGARTNER, Johann**
**85368 Moosburg (DE)**
• **GRUBER, Robert**
**83539 Pfaffing (DE)**
• **PERICEVIC, Aleksandar**
**82327 Tutzing (DE)**

(74) Vertreter: **Mattusch, Gundula**
**Knorr-Bremse AG**
**Moosacherstrasse 80**
**80809 München (DE)**

(56) Entgegenhaltungen:
**DE-A1-102005 056 064    DE-A1-102006 029 942**
**DE-B3-102006 036 278**

EP 2 491 265 B1

**Beschreibung**

Die Erfindung betrifft eine selbstverstärkende Scheibenbremse gemäß dem Oberbegriff des Anspruchs 1 sowie einen Bremsbelag nach dem Oberbegriff des Anspruchs 16.

Selbstverstärkende Scheibenbremsen, wie sie z.B. aus der DE 10 2006 036 278 B3 oder der DE 10 2006 029 942 A1 bekannt sind, nutzen die bei einer Bremsung auf den Bremsbelag wirkenden Umfangskräfte zur Unterstützung der Zuspannkraft, die von einem elektromechanischen Antrieb oder einem pneumatisch betätigten Bremszylinder über eine Zuspanneinrichtung aufgebracht wird. Dadurch kann der Antrieb erheblich kleiner dimensioniert werden.

Diese Selbstverstärkung wird durch eine Selbstverstärkungseinrichtung erreicht, die Bestandteil der Zuspanneinrichtung ist. Dabei sind, bezogen auf die Bremsscheibe, in axialer Richtung bewegliche Druckstempel vorgesehen, die in Korrespondenz mit dem zuspannseitigen Bremsbelag, üblicherweise einer einen Reibbelag tragenden Belagträgerplatte oder einer Belagdruckplatte als Bestandteil des Bremsbelages, jeweils eine Spreizlagerung bilden, wozu jeder Druckstempel stirnseitig eine Lagerkugel aufweist, die in einer mit in Umfangsrichtung der Bremsscheibe von innen nach außen ansteigenden Rampen versehenen Vertiefung einliegt.

Bei einer Bremsung, wenn also der Bremsbelag mittels der Zuspanneinrichtung gegen die Bremsscheibe gepresst wird, bewegt sich der Bremsbelag aufgrund der Reibkräfte beim Anpressen an die Bremsscheibe in deren Drehrichtung, wobei sich gleichzeitig die zugeordnete Rampe entlang der Lagerkugel bewegt, unter Verstärkung der auf die Bremsscheibe wirkenden axial ausgerichteten Bremskraft.

Zwar sind die Kugeln der Druckstempel, die im Übrigen beidseitig mit Abstand zu einem Bremsstempel der Zuspanneinrichtung angeordnet sind, der an den Bremsbelag angreift, in der Lage, den Bremsbelag in Umfangsrichtung zu stabilisieren, jedoch können sie einem radialen Schrägverschleiß des Bremsbelages nicht entgegen wirken. Die Stabilisierung der Betätigungsmechanik erfolgt bislang ausschließlich über die geometrische Beschaffenheit des mittig angeordneten Bremsstempels, allerdings nicht in einem ausreichende Maße.

Ausschlaggebend für den Schrägverschleiß der Bremsbeläge sind in erster Linie die Druckverteilung und ein Gleitgeschwindigkeitsprofil an der Reibfläche des Bremsbelages.

In der Konsequenz führt dies zu einem vorzeitigen Verschleiß und damit der vorzeitigen Notwendigkeit eines Bremsbelagwechsels, was naturgemäß einen erheblichen nachteiligen Einfluss auf die Betriebskosten des Nutzfahrzeuges mit sich bringt.

Der DE 10 2005 056064 A1 ist ein Bremsbelag zu entnehmen, der rampenförmige Ausnehmungen aufweist, die im Bereich einer konvexen Längsseite einer Belagträgerplatte angeordnet sind. Bezogen darauf ist unterhalb der Ausnehmungen eine Öffnung vorgesehen, in die in Funktion ein Kurbelzapfen eines Kurbeltriebs eingefügt ist, mit dem während eines Bremsvorgangs der Bremsbelag verschiebbar ist.

Der Erfindung liegt die Aufgabe zugrunde, eine selbstverstärkende Scheibenbremse der gattungsgemäßen Art so weiterzuentwickeln, dass ihre Funktionssicherheit dauerhaft verbessert und ihre Standzeit erhöht wird.

Diese Aufgabe wird durch eine Scheibenbremse mit den Merkmalen des Anspruchs 1 bzw. durch einen Bremsbelag mit den Merkmalen des Anspruchs 16 gelöst.

Durch diese konstruktive Ausbildung wird eine gleichmäßige Belastung des Bremsbelages über die gesamte Reibfläche und damit ein gleichmäßiger Belagverschleiß erreicht.

Die gemäß der Erfindung vorgeschlagene Geometrie der Anlagepunkte des Bremsstempels und der Druckstempel führt zu einer Stabilisierung des Bremsbelages in radialer Richtung. Durch einen möglichst großen Abstand der Druckstempel zueinander wird im Übrigen die Stabilisierung des Bremsbelages in Umfangsrichtung verbessert.

Nach einer vorteilhaften Weiterbildung der Erfindung ist vorgesehen, die Rampen der Selbstverstärkung direkt in die dem Reibbelag abgewandte Rückseite der Belagträgerplatte einzubringen. Hierzu kann eine einteilige Ausführung der Belagträgerplatte eingesetzt werden, die beispielsweise aus Gusseisen mit gehärteten oder ungehärteten Rampen gebildet ist oder als Schmiedeteil mit oder ohne Vergütung.

Neben der einteiligen Variante besteht die Möglichkeit, die Rampen in Einsätzen, die in die Belagträgerplatte eingepresst, eingeschweißt oder mit der Belagträgerplatte verstemmt sind, vorzusehen.

Diese Ausführung bietet den Vorteil einer von der Belagträgerplatte im Übrigen relativ unabhängigen Materialwahl. So kann beispielsweise ein hoclotemperaturfester Stahl für die Rampen verwendet werden, während die Belagträgerplatte im Übrigen aus Gusseisen besteht.

Die Rampen sind als Kugellaufbahnen ausgebildet, während die Kugel selbst gegenüber dem Druckstempel drehbar gehalten ist. Um eine weitgehend reibungsfreie Verdrehung der Kugel zu erreichen, ist diese in einer Gleitlagerschale gehalten, die vorzugsweise stirnseitig in den Druckstempel eingelassen ist, so dass sie vor Temperaturschädigungen durch die deutlich heißere Belagträgerplatte geschützt ist. Statt in einer Gleitlagerschale kann die Lagerung der Kugel auch an stirnseitig am Druckstempel vorgesehenen rampenförmigen Kugellaufbahnen gelagert sein, so dass sich in Kombination mit den Rampen der Belagträgerplatte Doppelrampen ergeben.

Durch die unmittelbare Anlage der Kugel an der Rampe bzw. deren Kugellaufbahn, erfolgt mit jedem Belagwechsel ein automatischer Austausch auch der Rampen, was zur verbesserten Funktions- und Betriebssicherheit der Scheibenbremse beiträgt.

Bevorzugt ist der Bremsstempel so am Bremsbelag angeschlossen, dass eine Verdrehung gegenüber der Belagträgerplatte ausgeschlossen ist. Darüber hinaus soll bei einer Betätigung ein Schwenken des Bremsstempels durch die umfänglich Bewegung des Bremsbelages ermöglicht werden.

Hierzu ist der Bremsstempel auf seiner der Belagträgerplatte zugeordneten Stirnseite, die die Druckfläche bildet, als Walzenkontur ausgebildet, so dass in radialer Richtung ein Linienkontakt des Bremsstempels mit der Belagträgerplatte besteht und ein Abrollen bzw. Schwenken des Bremsstempels gegenüber der Belagträgerplatte möglich ist.

Der Bremsstempel ist nach einem weiteren Gedanken der Erfindung im Sinne einer Schnappverbindung mit der Belagträgerplatte verbunden, die es ermöglicht, eine ausreichende Rückzugskraft auf die Belagträgerplatte zu übertragen. Dabei ist diese Verbindung so beschaffen, dass sie mit einfachem Werkzeug lösbar ist und bei Montage eines neuen Bremsbelages selbsttätig einschnappt.

Neben dem einfachen Wechsel des Bremsbelages erlaubt die geschilderte Anbindung des Bremsstempels an den Bremsbelag eine Sicherung der Selbstverstärkungseinrichtung gegen Rüttelbeanspruchungen, wie sie im Fahrbetrieb auftreten.

Weitere vorteilhafte Ausbildungen der Erfindung sind in den Unteransprüchen gekennzeichnet.

Ein Ausfühmgsbeispiel der Erfindung sowie der sich durch die Erfindung ergebenden Belastungsdaten werden nachfolgend anhand der beigefügten Zeichnungen beschrieben.

Es zeigen:

Figur 1  eine erfindungsgemäße Scheibenbremse in einer geschnittenen Draufsicht
Figur 2  einen Bremsbelag der Scheibenbremse in einer Rückansicht
Figur 3  einen Querschnitt durch den Bremsbelag gemäß der Linie III-III in Figur 2
Figur 4  die Reibbelagseite des Bremsbelages
Figur 5  ein Belastungsdiagramm des Bremsbelages unter Zugrundelegung eines in der
Figur 6  gezeigten Punktrasters des Bremsbelages
Figur 7  eine Tabelle mit ermittelten Werten, bezogen auf eine Vielzahl von Flächenanteile des Reibbelages
Figur 8  eine Einzelheit der Scheibenbremse in einem vergrößerten, geschnitten dargestellten Teilausschnitt.

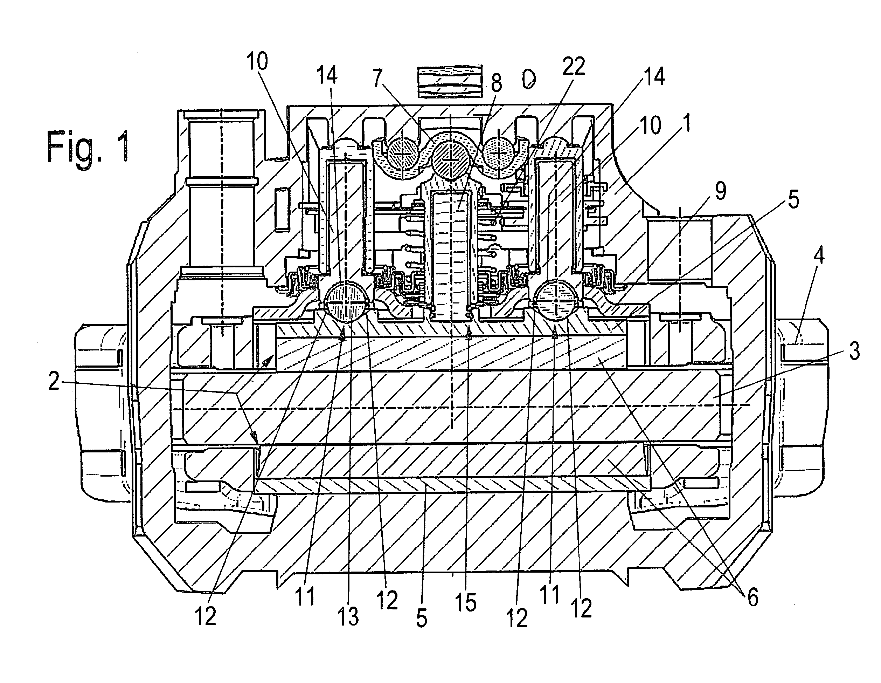

In der Figur 1 ist eine selbstverstärkende Scheibenbremse dargestellt, mit einem an einem ortsfesten Bremsträger 4 gehaltenen Bremssattel 1, in dem zwei Bremsbeläge 2 angeordnet sind, die in Funktion beidseitig gegen eine Bremsscheibe 3 pressbar sind.

Zum Zuspannen der Bremsbeläge 2 ist eine Zuspanneinrichtung in Form eines Drehhebels 7 und eines Bremsstempels 8 vorgesehen, über den der zugeordnete zuspannseitige Bremsbelag 2 in axialer Richtung, bezogen auf die Drehachse der Bremsscheibe 3, bewegbar ist.

Weiter ist eine Selbstverstärkungseinrichtung vorgesehen, die Spreizlager 11 aufweist, denen jeweils ein Druckstempel 10 zugeordnet ist, die mit einer Nachstelleinrichtung zur verschleißbedingten Nachstellung der Bremsbeläge 2 in Eingriff stehen.

Die Druckstempel 10 sind mit ihrem dem Bremsbelag 2 zugewanden Endbereich in einer Führungsplatte 9 gehalten, die in dem Bremsträger 4 in Zuspannrichtung verschiebbar ist.

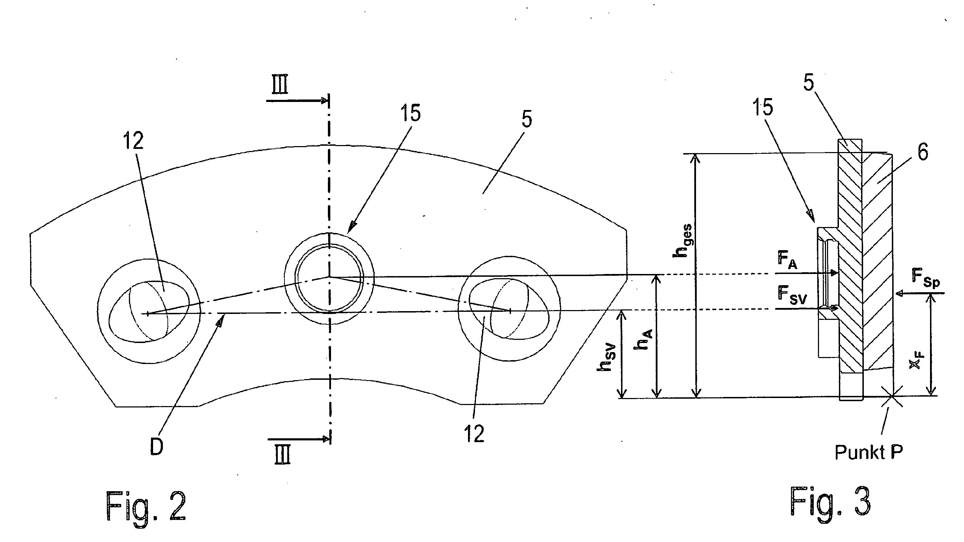

Jede Spreizlagerung 11 weist eine im zugeordneten Druckstempel 10 stirnseitig eingelassene und darin in einer Gleitlagerschale 14 positionierte Kugel 13 auf, die andererseits in einer kalottenförmigen, als Kugellaufbahn ausgebildeten Vertiefung einliegt, deren Seitenwand im Sinne von ansteigenden Rampen 12 ausgebildet ist (Figur 2).

Bei einer Bremsung, wenn also mittels des Bremshebels 7 der Bremsbelag 2 gegen die Bremsscheibe 3 gepresst wird, entstehen Umfangskräfte, durch die der Bremsbelag 2 in Drehrichtung der Bremsscheibe 3 verschoben wird, unter Abstandsveränderung des Bremsbelages 2 zum Druckstempel 10.

Beim Lösen der Bremse wird der Bremsbelag 2 durch eine Rückstellfeder 22 in eine sozusagen entspannte Ausgangsstellung zurückgeführt, in der die Kugeln 12 praktisch funktionsfrei in der Vertiefung des Bremsbelages 2 einliegen.

In dieser Stellung, die in der Figur erkennbar ist, liegen die Druckstempel 10 und eine Belagträgerplatte 5 des Bremsbelages 2 dicht aneinander, unter Einschluss der Spreizlagerung 11.

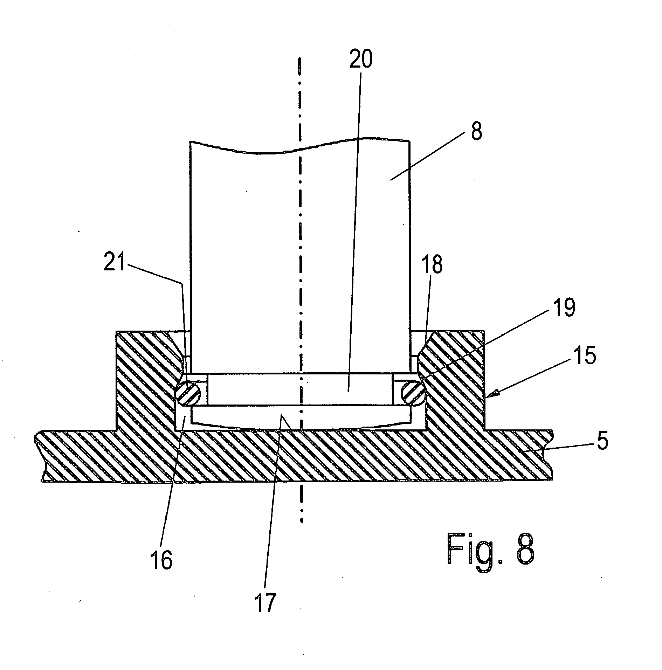

Die Druckstempel 10 und damit die Spreizlagerungen 11 sind beidseitig des Bremsstempels 8 angeordnet, der in einem Anschluss 15, der unter Bezugnahme auf die Figur 8 noch beschrieben wird, am zugeordneten Bremsbelag 2 gehalten ist.

Erfindungsgemäß sind die Spreizlagerungen 11 und die Aufnahme 15 so angeordnet, dass gedachte Verbindungsgeraden, wie sie in der Figur 2 erkennbar sind, zu den jeweiligen, durch die Mittelachsen der Druckstempel 10 und des Bremsstempels 8 bestimmten Mittelpunkten ein gleichseitiges Dreieck D bilden. Die Mittelpunkte können dabei in Bezug auf die Achse der Bremsscheibe 3 auf einem Radius liegen.

Unter Bezugnahme auf die Figuren 2 und 3 wird im Folgenden die sich ergebende Druckverteilung wiedergegeben:

Die Kraftverteilung zwischen den Stempeln ist von der Auslegung der Selbstverstärkung abhängig. Der entsprechende Selbstverstärkungsfaktor bestimmt, welche Spannkraft durch den Bremsstempel 8 aufgebracht werden muss und welche Kraft zusätzlich durch die Spreizlager 11 erreicht wird.

$$\text{Selbstverstärkungsfaktor: } C_{SV} = \frac{F_{Sp}}{F_A} = 1 - \frac{\mu}{\tan(\alpha + \gamma)}$$

Mit: Gesamtspannkraft $F_{Sp}$
Kraft mittlerer Stempel $F_A$
Belagreibwert $\mu$
Rampenwinkel $\alpha$
Reibwinkel der Kugel-Lagenmg $\gamma$

Für die Auslegung werden hier Nennwerte, also erwartete Durchschnittswerte für Reibwert und Lagerreibung angenommen Kräfteverhältnis

$$\text{Anteil mittlerer Stempel: } \quad x_A = \frac{1}{C_{SV}}$$

$$\text{Anteil Selbstverstärkungsstempel gesamt: } \quad x_{SV} = 1 - x_A$$

Die Lage der resultierenden Kraft ergibt sich durch das Momentengleichgewicht um den Punkt P:

$$x_F = \frac{1}{F_{Sp}}(h_A F_A + h_{SV} F_{SV})$$

mit der Resultierenden $F_{Sp} = F_A + F_{SV}$

Diese Gesamtkraft stellt gleichzeitig die reibflächenseitige Resultierende der Flächenlast dar, so dass eine Abschätzung der Druckverteilung durchgeführt werden kann.

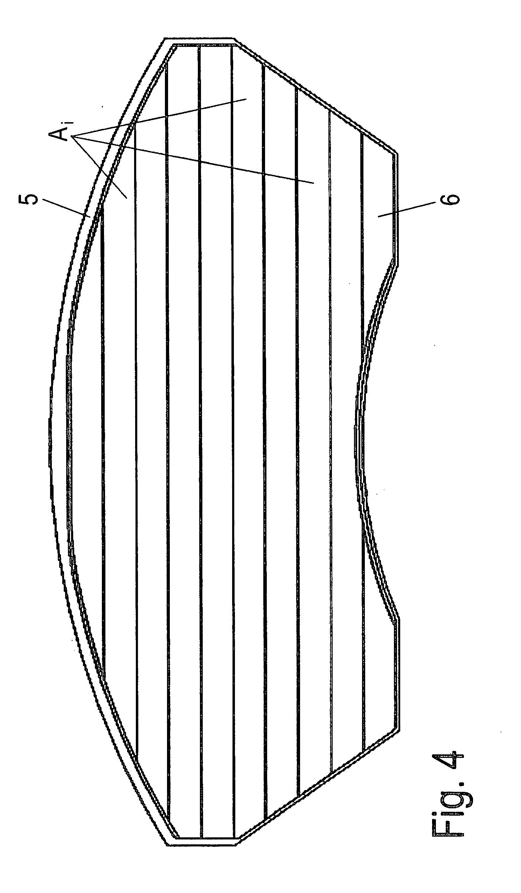

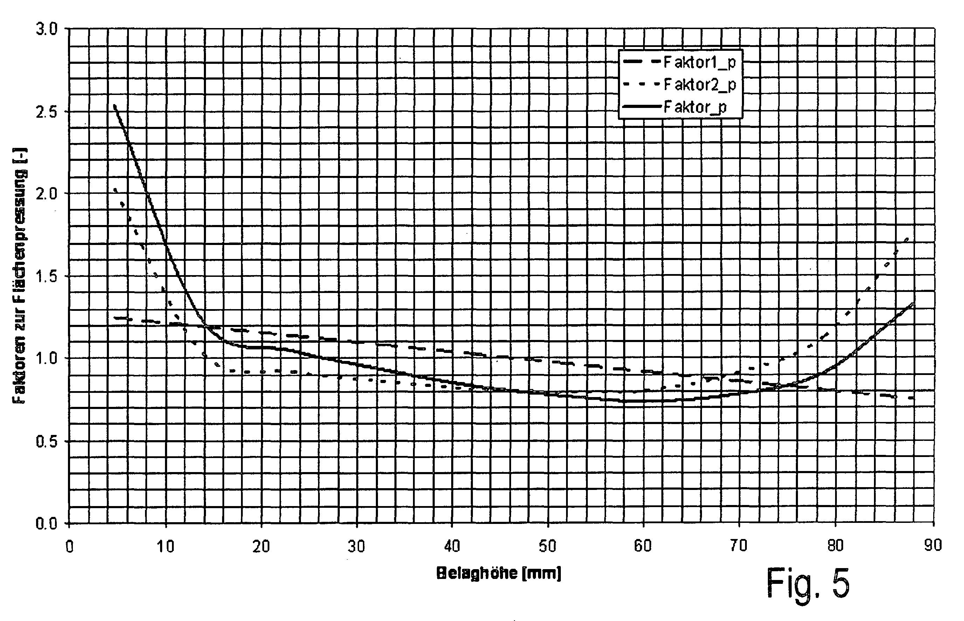

Hierzu wird die Reibfläche des auf der Belagträgerplatte 5 gehaltenen Reibbelages 6, entsprechend der Figur 4 in Flächenbereiche $A_i$ gleicher Höhe eingeteilt. Unter der Annahme, dass alle Flächen $A_i$ gleich groß seien, ergibt sich eine idealisierte Druckverteilung (Faktor1_p), die ihren Schwerpunkt auf der Höhe $x_F$ (Figur 3) hat, wie sich aus dem Diagramm nach der Figur 5 ergibt.

Hierbei wird eine lineare Funktion über der Höhe des Reibbelages 6 angenommen. Eine Variable m stellt die Steigung der Geraden dar und wird so gewählt, dass der Schwerpunkt der Flächenlast genau im berechneten Angriffspunkt der resultierenden Kraft liegt:

$$\text{Faktor1}\_p = m \cdot h + 1 - \frac{m \cdot h_{ges}}{2}$$

Zusätzlich müssen nun die ungleichen Drucklasten infolge verschiedener Flächeninhalte berücksichtigt werden (Faktor2_p) - siehe Diagramm:

$$\text{Faktor2}\_p_i = \frac{A_i}{A_m}$$

mit $A_i$ = Flächeninhalt der Einzelfläche, $A_m$ = mittlere Fläche
Das einheitslose Produkt Faktor_p = Faktor1_p·Faktor 2_p gibt die Flächenlast wieder.

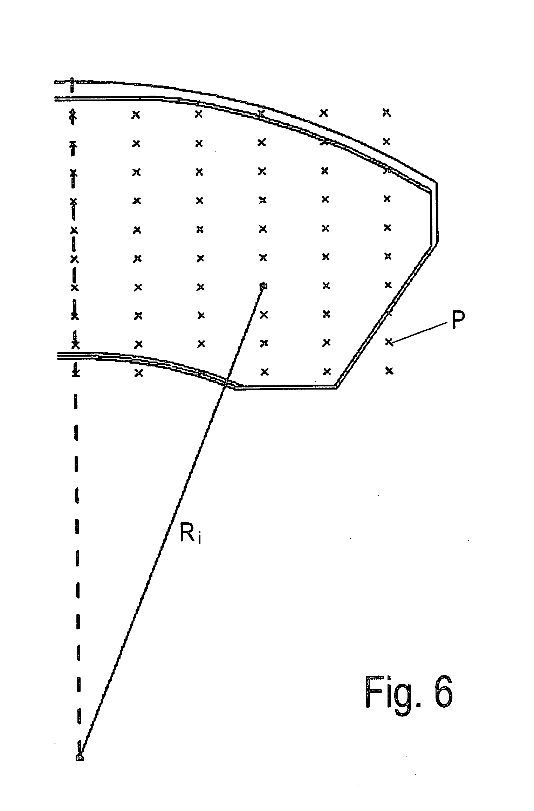

Um neben der angenäherten Druckverteilung auch die Gleitgeschwindigkeit zu berücksichtigen, wurde ein gleichmäßiges Punkteraster (Figur 6) über die Reibfläche gelegt, dessen Einzelpunkte p jeweils auf mittlerer Höhe der Einzelflächen $A_i$ liegen. An diesen Punkten p wurde der Abstand zur Drehachse der Bremsscheibe 3, also der Radius $R_i$, ermittelt. Zusätzlich wurde der Mittelwert der Radien bestimmt.

Der Geschwindigkeitsfaktor entspricht damit dem Quotienten

$$\text{Faktor\_}v_i = \frac{R_i}{R_m}$$

mit $R_i$ = Radius eines Punktes, $R_m$ = mittlerer Radius

$$Faktor\_p \cdot Faktor\_v$$

Bildet man nun das Produkt zwischen *Faktor_p* und *Faktor_v* - im folgenden pv, so entspricht dieses einer für den Verschleiß maßgeblichen Größe. Die Krafteinleitungspunkte wurden so gewählt, dass die Höhe des Schwerpunktes der Last pv im Bereich des Flächenschwerpunktes liegt. Somit wird eine möglichst homogene Abnutzung des Bremsbelags erreicht.

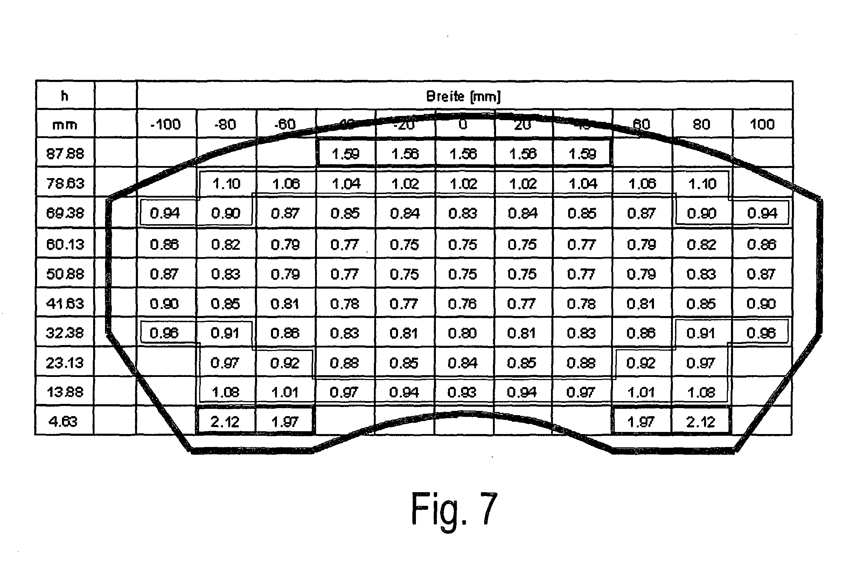

Damit ergeben sich die in der Figur 7 tabellarisch aufgelisteten Werte, deren Berechnung mit folgenden Parametern durchgeführt wurde:

*Rampenwinkel* $\alpha$ = 32°
*Lagerreibwert* $\mu_L$ =0,05 *Reibwinkel* $\gamma$= 2,862°
Belag - Nennreibwert $\mu$ = 0,375
*Gesamthöhe des Belages* $h_{ges}$= 92,5*mm*
*Höhe der Einzelflächen* $\Delta h$ =9,25*mm*
*mittlere Fläche* $A_m$= 1678,4*mm*$^2$
*Lage der Resultierenden* $x_F$=42,04*mm*
*Flächenschwerpunkt Gesamfläche* $x_{Fläche}$=46,46*mm*

Damit wurde die Höhe der Selbstverstärkungsstempel und des mittleren Stempels bezogen auf die untere Belagkante bestimmt:

$$h_{SV} = 36,5\pm1,5$$

$$h_A = 48,5\pm1,5$$

Diese beiden Werte wurden für die Belagrückenplatte der vorliegenden selbstverstärkenden Bremse festgelegt.

In der Figur 8 ist die Befestigung des Bremsstempels 8 an der Belagträgerplatte 5 als Einzelheit dargestellt. Es ist zu erkennen, dass der Anschluss 15 der Belagträgerplatte 5 eine Aufnahme 16 aufweist, in der der Bremsstempel 8 axial gesichert gehalten ist.

Hierzu ist in dem Bremsstempel 8 eine umlaufende Ringnut 20 vorgesehen, in der ein federnder Sicherungsring festgelegt ist, der sich an einer Ausführfase 19 der Aufnahme 16 abstützt.

Damit ist ein Abziehen des Bremsbelages 2, beispielsweise für ein verschleißbedingtes Auswechseln, leicht möglich, da lediglich die Federkraft des Sicherungsringes 21 für dessen radiales Zusammendrücken aufgebracht werden muss, bis der Bremsbelag 2 abgezogen werden kann.

Für ein leichtes Aufschieben des Bremsbelages 2 auf den Bremsstempel 8 ist die Einführöffnung der Aufnahme 16 als Einführfase 18 ausgebildet, durch die beim Aufschieben des Bremsbelages 2 bzw. der Belagträgerplatte 5 der Sicherungsring 21 radial so weit zusammengedrückt wird, dass ein einfaches Überfahren möglich ist, bei einer gleichzeitig rückholgesicherten Arretierung des Bremsbelages 2 am Bremsstempel 8.

Um ein durch eine beim Bremsen auftretende Bewegung des Bremsbelages 2 in Umfangsrichtung bewirkte Verschwenkung des Bremsstempels 8 auszugleichen, ist die am Grund der Aufnahme 16 anliegende Druckfläche 17 des Bremsstempels 8 konvex im Sinne einer Walzenkontur ausgebildet, so dass eine radial ausgerichtete linienförmige Anlage der Druckfläche 17 an der Belagträgerplatte 5 gegeben ist.

Bezugszeichenliste

| | |
|---|---|
| 1 | Bremssattel |
| 2 | Bremsbelag |
| 3 | Bremsscheibe |
| 4 | Bremsträger |
| 5 | Belagträgerplatte |
| 6 | Reibbelag |
| 7 | Drehhebel |
| 8 | Bremsstempel |
| 9 | Führungsplatte |
| 10 | Druckstempel |
| 11 | Spreizlager |
| 12 | Rampe |
| 13 | Kugel |
| 14 | Gleitlagerschale |
| 15 | Anschluss |
| 16 | Aufnahme |
| 17 | Druckfläche |
| 18 | Einführfase |
| 19 | Ausführfase |
| 20 | Ringnut |
| 21 | Sicherungsring |
| 22 | Rückstellfeder |

**Patentansprüche**

1. Selbstverstärkende Scheibenbremse mit einem eine Bremsscheibe (3) übergreifenden Bremssattel (1), beidseitig an die Bremsscheibe (3) anpressbaren Bremsbelägen (2), von denen ein zuspannseitiger über einen in einer Aufnahme (16) axial gesichert gehaltenen, andererseits an einem Drehhebel (7) einer Zuspanneinrichtung anliegenden Bremsstempel (8) betätigbar ist, zwei zum Bremsstempel (8) gleich gerichtet und beidseitig abständig dazu angeordneten Druckstempeln (10), die sich jeweils über eine Spreizlagerung (11) einer Selbstverstärkungseinrichtung am Bremsbelag (2) abstützen, **dadurch gekennzeichnet, dass** die Spreizlagerungen (11) und die Aufnahme (16) so angeordnet sind, dass gedachte Verbindungsgeraden zu den jeweiligen, durch die Mittelachsen der Druckstempel (10) und des Bremsstempels (8) bestimmten Mittelpunkten ein Dreieck (D) bilden.

2. Selbstverstärkende Scheibenbremse nach Anspruch 1, **dadurch gekennzeichnet, dass** die Verbindungsgeraden ein gleichschenkliges Dreieck (D) bilden.

3. Selbstverstärkende Scheibenbremse nach Anspruch 1 oder 2, **dadurch gekennzeichnet, dass** die Spreizlagerungen (11) und die Aufnahme (15) im gleichen Radius zur Mittelachse der Bremsscheibe (3) angeordnet sind.

4. Selbstverstärkende Scheibenbremse nach einem der vorhergehenden Ansprüche, **dadurch gekennzeichnet, dass** die die Spreizlagemg (11) bildenden Bauteile aus korrosions- und verschleißfestem Material hergestellt sind.

5. Selbstverstärkende Scheibenbremse nach einem der vorhergehenden Ansprüche, **dadurch gekennzeichnet, dass** die Spreizlagerung (11) eine Kugel (13) aufweist, die stirnseitig im Druckstempel (10) in einer darin befestigten Gleitlagerschale (14) gelagert ist.

6. Selbstverstärkende Scheibenbremse nach einem der vorhergehenden Ansprüche, **dadurch gekennzeichnet, dass** zur Aufnahme der Kugel (13) im Druckstempel (10) stirnseitig eine Vertiefung vorgesehen ist, deren Seitenflächen im Sinne von Kugellaufbahnen als ansteigende Rampen ausgebildet sind.

**7.** Selbstverstärkende Scheibenbremse nach einem der vorhergehenden Ansprüche, **dadurch gekennzeichnet, dass** die zur Aufnahme der Kugel (13) im Bremsbelag (2) vorgesehene Vertiefung, deren Seitenflächen im Sinne von Kugellaufbahnen als ansteigende Rampen (12) ausgebildet sind, in einem mit einer Belagträgerplatte (5) des Bremsbelages (2) verbundenen Einsatz angeordnet ist.

**8.** Selbstverstärkende Scheibenbremse nach einem der vorhergehenden Ansprüche, **dadurch gekennzeichnet, dass** die die Kugel (13) aufnehmende Vertiefung in die Belagträgerplatte (5) eingebracht ist.

**9.** Selbstverstärkende Scheibenbremse nach einem der vorhergehenden Ansprüche, **dadurch gekennzeichnet, dass** die Spreizlagerung (11) und die Belagträgerplatte (5) einstückig ausgebildet sind, vorzugsweise als Gussteil.

**10.** Selbstverstärkende Scheibenbremse nach einem der vorhergehenden Ansprüche, **dadurch gekennzeichnet, dass** eine an der Belagträgerplatte (5) anliegende Druckfläche (17) des Bremsstempels (8) konvex geformt ist.

**11.** Selbstverstärkende Scheibenbremse nach einem der vorhergehenden Ansprüche, **dadurch gekennzeichnet, dass** die Druckfläche (17) in radialer Richtung, bezogen auf die Mittelachse der Bremsscheibe (3), linienförmig an der Belagträgerplatte (5) anliegt.

**12.** Selbstverstärkende Scheibenbremse nach einem der vorhergehenden Ansprüche, **dadurch gekennzeichnet, dass** die Einführöffnung der Aufnahme (16) unter Bildung eines Einführtrichters mit einer Einführfase (18) versehen ist.

**13.** Selbstverstärkende Scheibenbremse nach einem der vorhergehenden Ansprüche, **dadurch gekennzeichnet, dass** sich an die Einführfase (18) nach einem Übergangsbereich eine gegengerichtete Ausführfase (19) anschließt.

**14.** Selbstverstärkende Scheibenbremse nach einem der vorhergehenden Ansprüche, **dadurch gekennzeichnet, dass** der Bremsstempel (8) in seinem der Belagträgerplatte (5) zugeordneten Endbereich eine umlaufende Ringnut (20) aufweist, in der ein zusammendrückbarer Sicherungsring (21) gehalten ist.

**15.** Selbstverstärkende Scheibenbremse nach einem der vorhergehenden Ansprüche, **dadurch gekennzeichnet, dass** der Sicherungsring (21) aus Federdraht gebildet ist.

**16.** Bremsbelag für eine selbstverstärkende Scheibenbremse mit einer Belagträgerplatte (5) und einem darauf befestigten Reibbelag (6), wobei die Belagträgerplatte (5) auf ihrer dem Reibbelag (6) abgewandten Seite mit zwei abständig zueinander angeordneten, jeweils gegenläufig gerichtete Rampen (12) aufweisenden Spreizlagern (11) versehen ist, zwischen denen eine Aufnahme (16) für einen Bremsstempel (8) angeordnet ist, **dadurch gekennzeichnet, dass** insgesamt zwei Spreizlagerungen (11) vorgesehen sind und dass die Spreizlagerungen (11) und die Aufnahme (16) so angeordnet sind, dass gedachte Verbindungsgeraden zu den jeweiligen Mittelpunkten ein Dreieck (D) bilden.

## Claims

**1.** Self-energising disc brake, comprising a brake calliper (1) encompassing the brake disc (3), brake pads (2) which can be pressed against the brake disc (3) on both sides and of which an application-side brake pad (2) can be actuated via a brake plunger (8) axially secured in a receptacle (16) and bearing against a rotary lever (7) of an application device at the other end, and two pressure plungers (10) which are oriented in the same direction ad the brake plunger (8), arranged at a distance therefrom on both sides and supported on the brake pad (2) via an expansion mounting (11) of a self-energising device each, **characterised in that** the expansion mountings (11) and the receptacle (16) are arranged such that imaginary straight connecting lines to the respective centres determined by the central axes of the pressure plungers (10) and the brake plunger (8) for a triangle (D).

**2.** Self-energising disc brake according to claim 1, **characterised in that** the straight connecting lines form an isosceles triangle (D).

**3.** Self-energising disc brake according to claim 1 or 2, **characterised in that** the expansion mountings (11) and the receptacle (15) are arranged in the same radius relative to the central axis of the brake disc (3).

**4.** Self-energising disc brake according to any of the preceding claims, **characterised in that** the components forming the expansion mounting (11) are made of a corrosion resistant and wear resistant material.

5. Self-energising disc brake according to any of the preceding claims, **characterised in that** the expansion mounting (11) comprises a ball (13) which is mounted at the end face in the pressure plunger (10) in a plain bearing shell (14) secured therein.

6. Self-energising disc brake according to any of the preceding claims, **characterised in that**, for the accommodation of the ball (13) in the pressure plunger (10), the end face is provided with a recess the lateral surfaces of which are designed as rising ramps in the manner of ball tracks.

7. Self-energising disc brake according to any of the preceding claims, **characterised in that** the recess provided for the accommodation of the ball (13) in the brake pad (2), the lateral surfaces of which are designed as rising ramps (12) in the manner of ball tracks, is located in an insert connected to a pad support plate (5) of the brake pad (2).

8. Self-energising disc brake according to any of the preceding claims, **characterised in that** the recess accommodating the ball (13) is placed in the pad support plate (5).

9. Self-energising disc brake according to any of the preceding claims, **characterised in that** the expansion mounting (11) and the pad support plate (5) are designed as a single piece, preferably as a casting.

10. Self-energising disc brake according to any of the preceding claims, **characterised in that** a contact surface (17) of the brake plunger (8) which bears against the pad support plate (5) has a convex shape.

11. Self-energising disc brake according to any of the preceding claims, **characterised in that** the contact surface (17) bears against the pad support plate (5) in a linear manner in the radial direction, relative to the central axis of the brake disc (3).

12. Self-energising disc brake according to any of the preceding claims, **characterised in that** the insertion opening of the receptacle (16) is provided with an insertion chamfer (18) while forming an insertion funnel.

13. Self-energising disc brake according to any of the preceding claims, **characterised in that** the insertion chamfer (18) adjoins, after a transition region, a lead-out chamfer (19) oriented in the opposite direction.

14. Self-energising disc brake according to any of the preceding claims, **characterised in that** the brake plunger (8) has in its end region assigned to the pad support plate (5) a continuous annular groove (20) in which a compressible circlip (21) is held.

15. Self-energising disc brake according to any of the preceding claims, **characterised in that** the circlip (21) is made of spring steel.

16. Brake pad for a self-energising disc brake comprising a pad support plate (5) and a friction lining (6) secured thereto, wherein the pad support plate (5) is on the side remote from the friction lining (6) provided with expansion mountings (11) which are arranged at a distance from one another and have ramps (12) oriented in opposite directions and between which a receptacle (16) for a brake plunger (8) is located, **characterised in that** two expansion mountings (11) in total are provided, and **in that** the expansion mountings (11) and the receptacle (16) are arranged such that imaginary straight connecting lines to the respective centres form a triangle (D).


**Revendications**

1. Frein à disque autoserreur à un étrier de frein (1) chevauchant un disque de frein (3), aux garnitures de frein (2) aptes à être pressé contre ledit disque de frein des deux côtés, dont une, du côté de serrage, est commandable via un poinçon de freinage (8) tenu, de façon bloquée, en sens axial dans un élément récepteur (16) et portant, d'autre côté, contre un levier rotatif (7) d'un moyen de serrage, qui comprend deux poinçons de pression (10) orientés en même direction que ledit poinçon de freinage (8) et disposés des deux côtés à un écart dudit poinçon de commande (8), qui s'appuient via un logement écarteur respectif (11) d'un moyen en conception à renfort automatique à ladite garniture de frein (2), **caractérisé en ce que** lesdits logements écarteurs (11) et ledit élément récepteur (16) sont disposés d'une telle manière que des droites de connexion imaginaires vers les centres respectifs, qui sont définis par les axes centraux desdits poinçons de pression (10) et dudit poinçon de freinage (8), constituent un triangle (D).

2. Frein à disque autoserreur (1) selon la revendication 1, **caractérisé en ce que** lesdites droites de connexion constituent un triangle isocèle (D).

3. Frein à disque autoserreur (1) selon la revendication 1 ou 2, **caractérisé en ce que** lesdits logements écarteurs (11) et ledit élément récepteur (15) sont disposés dans le même rayon relatif à l'axe central de ladite garniture de frein (3).

4. Frein à disque autoserreur (1) selon une quelconque des revendications précédentes, **caractérisé en ce que** des composants formant lesdits logements écarteurs (11) sont faits en un matériau résistant à la corrosion et à l'usure.

5. Frein à disque autoserreur (1) selon une quelconque des revendications précédentes, **caractérisé en ce que** ledit logement écarteur (11) comprend une bille (13), qui est logée du côté frontal, dans ledit poinçon de pression (10) dans une coquille de palier lisse (14) y fixée.

6. Frein à disque autoserreur (1) selon une quelconque des revendications précédentes, **caractérisé en ce qu'**un évidement est formé dans ledit poinçon de pression du côté frontal pour la réception de ladite bille (13), dont les faces latérales sont configurées en tant que des rampes montantes dans le sens des pistes de roulement de bille.

7. Frein à disque autoserreur (1) selon une quelconque des revendications précédentes, **caractérisé en ce que** ledit évidement formé dans ladite garniture de frein (2) pour la réception de ladite bille (13), dont les faces latérales sont configurées en tant que des rampes montantes (12) dans le sens des pistes de roulement de bille, est disposé dans un insert relié à ladite plaque de support de garniture (5) de ladite garniture de frein (2).

8. Frein à disque autoserreur (1) selon une quelconque des revendications précédentes, **caractérisé en ce que** ledit évidement, qui reçoit ladite bille (13), est formé dans ladite plaque de support de garniture (5).

9. Frein à disque autoserreur (1) selon une quelconque des revendications précédentes, **caractérisé en ce que** ledit logement écarteur (11) et ladite plaque de support de garniture (5) présentent une configuration intégrale, de préférence sous forme d'une pièce moulée.

10. Frein à disque autoserreur (1) selon une quelconque des revendications précédentes, **caractérisé en ce qu'**une aire de pression (17) dudit poinçon de freinage (8), qui porte contre ladite plaque de support de garniture (5), présente une forme convexe.

11. Frein à disque autoserreur (1) selon une quelconque des revendications précédentes, **caractérisé en ce que** ladite aire de pression (17) porte contre ladite plaque de support de garniture (5) de façon linéaire en sens radial, relativement à l'axe central dudit disque de frein (3).

12. Frein à disque autoserreur (1) selon une quelconque des revendications précédentes, **caractérisé en ce que** l'ouverture d'introduction dudit élément récepteur (16) est munie d'un chanfrein d'entrée (18), en formant un entonnoir d'introduction.

13. Frein à disque autoserreur (1) selon une quelconque des revendications précédentes, **caractérisé en ce que**, suivant une zone de transition, ledit chanfrein d'entrée (18) est suivi d'un chanfrein de sortie (19) en sens opposé.

14. Frein à disque autoserreur (1) selon une quelconque des revendications précédentes, **caractérisé en ce que** ledit poinçon de freinage (8) comprend une rainure annulaire circonférentielle (20) dans sa zone terminale affectée à ladite plaque de support de garniture (5), dans laquelle un anneau d'arrêt compressible (21) est retenu.

15. Frein à disque autoserreur (1) selon une quelconque des revendications précédentes, **caractérisé en ce que** ledit anneau d'arrêt (21) est fait en un fil de ressort.

16. Garniture de frein pour un frein à disque autoserreur, comprenant une plaque de support de garniture (5) et une garniture de frottement (6) y fixée, dans laquelle ladite plaque de support de garniture (5) est munie, de son côté opposé à ladite garniture de frottement (6), de deux logements écarteurs (11) disposés à un écart l'un de l'autre, qui comprennent des rampes (12) respectives à orientation en sens opposés, entre lesquelles un élément récepteur (16) est disposé à recevoir un poinçon de freinage (8), **caractérisé en ce qu'**au total deux logements écarteurs (11) sont disposés, et **en ce que** lesdits logements écarteurs (11) et ledit élément récepteur (16) sont disposés d'une telle façon, que des droites de connexion imaginaires vers les centres respectifs constituent un triangle (D).

Fig. 1

Fig. 3

Fig. 2

Fig. 4

Fig. 5

Fig. 6

| h | | Breite [mm] | | | | | | | | | | |
|---|---|---|---|---|---|---|---|---|---|---|---|---|
| mm | | -100 | -80 | -60 | -40 | -20 | 0 | 20 | 40 | 60 | 80 | 100 |
| 87.88 | | | | | 1.59 | 1.56 | 1.56 | 1.56 | 1.59 | | | |
| 78.63 | | | 1.10 | 1.06 | 1.04 | 1.02 | 1.02 | 1.02 | 1.04 | 1.06 | 1.10 | |
| 69.38 | | 0.94 | 0.90 | 0.87 | 0.85 | 0.84 | 0.83 | 0.84 | 0.85 | 0.87 | 0.90 | 0.94 |
| 60.13 | | 0.86 | 0.82 | 0.79 | 0.77 | 0.75 | 0.75 | 0.75 | 0.77 | 0.79 | 0.82 | 0.86 |
| 50.88 | | 0.87 | 0.83 | 0.79 | 0.77 | 0.75 | 0.75 | 0.75 | 0.77 | 0.79 | 0.83 | 0.87 |
| 41.63 | | 0.90 | 0.85 | 0.81 | 0.78 | 0.77 | 0.76 | 0.77 | 0.78 | 0.81 | 0.85 | 0.90 |
| 32.38 | | 0.96 | 0.91 | 0.86 | 0.83 | 0.81 | 0.80 | 0.81 | 0.83 | 0.86 | 0.91 | 0.96 |
| 23.13 | | | 0.97 | 0.92 | 0.88 | 0.85 | 0.84 | 0.85 | 0.88 | 0.92 | 0.97 | |
| 13.88 | | | 1.08 | 1.01 | 0.97 | 0.94 | 0.93 | 0.94 | 0.97 | 1.01 | 1.08 | |
| 4.63 | | | 2.12 | 1.97 | | | | | | 1.97 | 2.12 | |

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006036278 B3
- DE 102006029942 A1
- DE 102005056064 A1